# EUROPEAN PATENT SPECIFICATION

(11) **EP 3 060 610 B1**
(45) Date of publication and mention of the grant of the patent: **21.02.2018**
(21) Application number: 14787193.3
(22) Date of filing: 23.10.2014
(51) Int. Cl.: C09D 5/00

(54) **ANTI-STAINING COATING COMPOSITION**
BESCHICHTUNGSZUSAMMENSETZUNG
COMPOSITIONS DE REVÊTEMENT

(30) Priority: 25.10.2013 EP 13190187
(43) Date of publication of application: 31.08.2016
(73) Proprietor: PPG Industries Ohio, Inc., Cleveland, OH 44111 (US)
(72) Inventor: MARAL, Jean-Luc, F-76700 Gonfreville L'Orcher (FR); DUCROCQ, M Laudine, F-76700 Gonfreville L'Orcher (FR); HAMON, Yves, F-76700 Gonfreville L'Orcher (FR)
(74) Representative: Appleyard Lees IP LLP
(86) International application number: PCT/EP2014/072799
(87) International publication number: WO 2015/059253

(56) References cited:
- WO-A1-2005/059208
- WO-A1-2012/002933
- WO-A2-2008/036628
- US-A1- 2007 036 903
- US-A1- 2012 070 594
- US-B1- 8 227 561

## Description

The present invention relates to a coating composition. More specifically it relates to a coating composition for a food or beverage container, in particular metallic containers such as cans.

Containers such as cans have been used as a convenient method to store food and beverages for many years. Typically such cans comprise an outer metal structure formed either from two or three pieces adjoined by welding to form a body and a lid, and an inner coating applied to the exposed inner surfaces of the can formed from a polymeric resin which may be natural or synthetic. The inner coating protects the outer metal structure from interacting with the contents of the can.

Modern can coatings have advanced from the use of simple tin layers or natural plant oils to the use of various polymeric blends comprising different resins, crosslinkers, solvents and other components. Usually the coatings are thin thermoset polymer films comprising a thermoset resin and a crosslinker. In some cases, can coatings may comprise an acrylic polymer within a water based solvent, whereas in other cases can coatings may comprise a non-acrylic polymer within an organic solvent. In each case, the coating is typically applied to the can in either a roll or spray coat and then cured to form a hard resin film by exposure to heat and/or UV light.

One of the most important roles of the coating is to preserve the food or beverage stored within the can such that it retains its original appearance, taste, odour, colour and texture. A secondary role is to improve the appearance of the can itself. It is a known problem that storage of some intensely coloured foods or beverages within containers such as cans can result in staining of the inner coating of the container. In particular, red coloured foods such as tomatoes, which are frequently stored in cans, may impart a yellow or orange stain to the internal coating of the can. This staining is unpleasant for consumers and reduces the appeal of the canned product. Also, the leaching of the colourant from the food or beverage into the coating means that flavour and colour in the food or beverage itself is perceived to be reduced.

WO 2012/002933 discloses coating materials for bisphenol A-containing polymers. WO 2008/036628 discloses food and beverage containers and methods of coating. US 2007/0036903 discloses bisphenol A and aromatic glycidyl ether-free coatings. US 8227561 discloses bisphenol-A replacement materials. US 2012/0070594 discloses hydrogenated bisphenol-A-based polymers as substitutes for bisphenol-A-based polymers. WO 2005/059208 discloses a process for applying a coating to a coiled metal sheet.

It is an object of the present invention to address the aforementioned or other problems.

According to a first aspect of the present invention, there is provided a coating composition for a food or beverage container, the coating composition comprising an additive being operable to disrupt the chromophore of a colourant, upon absorption of the said colourant into the cured coating composition.

Although the invention is described in terms of "an" additive, one or more such additives can be used. Similarly, when the invention is described in terms of "a" resin, "a resin additive" and "a" crosslinker, one or more of these items, and any other coating component, can be used.

Advantageously, the additive disrupts the chromophore of a colourant once it is absorbed into the coating of a food or beverage container. The disruption of the chromophore means that the colourant is not visible or is not as visible to the human eye. Therefore, advantageously, the coating of the container appears unstained or less stained.

In the prior art, it is known to try to minimize the pore size of a cured coating composition (film) to thereby physically prevent the absorption of colourants into the cured coating composition. In this manner, the staining of the cured coating composition may be reduced. However, the coating composition of the present invention includes at least one additive that interacts with the colourant after it has been absorbed into the cured coating composition to disrupt the chromophore of the colourant and thereby reduce or prevent staining.

The term "colourant" as used herein means any substance that imparts color and/or other opacity. References to colourant herein includes pigments, dyes and tints.

The term "operable to disrupt the chromophore" as used herein means any substance that interacts with the chromophore of a colorouant to thereby change the colour of the chromophore. For example, the substance may chemically interact with the colourant by, for example interacting with a conjugated network of double bonds within the chromophore. Such mode of action can be by hydrogenating some or all of the conjugated double bonds, or by complexing a further material with the conjugated double bods etc.

Suitably, the colourant is present in the food or beverage which is stored in the food or beverage container. It will be appreciated that the colourant may be one that occurs naturally in the food or beverage and/or may be one that is added to the food or beverage.

Suitably, the additive is operable to disrupt the chromophore of the absorbed colourant to the extent that its visibility to the human eye is reduced or removed.

In one embodiment, the additive comprises a polymer, which may be a homopolymer, such as a functionalised homopolymer. The polymer suitably comprises a one or more, (suitably a plurality of) functional groups operable to interact with and/or disrupt the chromophore of a colourant. Suitably, the functional groups of the polymer comprise one or more epoxy, amide, keto, vinyl, hydroxyl and/or carboxyl groups or any combination thereof.

Suitably, the functional groups are selected from hydroxyl or epoxy groups.

Suitably, the polymer comprises a polydiene, more suitably a polyalkyldiene. For example, the polymer comprises a poly C1-C10 diene. In one embodiment, the polymer comprises polybutadiene.

In one embodiment, the additive may be a hydroxyl functional polybutadiene, which may be selected from the PolyBd ® or Krasol ® supplied by Cray Valley Coatings.

In one embodiment the polymer additive may comprise a copolymer which may be formed from polybutadiene, suitably hydroxyl functional and /or epoxy functional polybutadiene. The polybutadiene may be ester linked polybutadiene, for example by reaction of hydroxyl functional and /or epoxy functional polybutadiene with dicarboxylic acids or anhydrides. Suitable dicarboxylic acid or derivatives include, for example succininc acid , succinic anhydride, adipic acid, glutaric acid, adipic acid, maleic anhydride, itaconic anhydride or tetrahydrophthalic anhydride or mixtures thereof.

Suitably, the polymer additive has a number average molecular weight (Mn) of about 1000 to11000, such as a number average molecular weight (Mn) of about 1000 to 8000. In one embodiment, the polymer additive has a number average molecular weight (Mn) of below about 3500.

Alternatively or additionally, the additive may comprise a siccative material operable to disrupt the chromophore of an absorbed colourant. The siccative material may comprise one or more metal, such as a transition metal. In one embodiment, the siccative material may comprise one or more of the following a transition metal such as cobalt, iron, manganese, vanadium, zinc, or zirconium; an alkaline earth metal, such as calcium, magnesium or strontium; an alkali metal such as lithium or potassium; a lanthanide such as cerium or other metals such as aluminium and/or bismuth.

In one embodiment, the siccative may be a coordination compound or a "salt" which may comprise the metal combined with a carboxylic acid (or derivative thereof). For example, suitable carboxilic acids include acetic acid, capric acid, caprylic acid, isodecanoic acid, linoleic acid, naphthenic acid, neodecanoic acid, octanoic acid, 2-ethyl hexanoic acid, oleic acid, palmitic acid or stearic acid.

In one embodiment, the additive may comprise calcium octoate.

The additive is suitably present in the coating composition in an amount of about 0.2 - 6 wt% (based on the total solids of the coatings ingredients), such as about 0.2 - 5 wt% (based on the total solids of the coatings ingredients). In one embodiment, the additive may be present in the coating composition in any amount of about 0.5 - 3 wt% (based on the total solids of the coatings ingredients), such as about 0.5 - 2 wt% (based on the total solids of the coatings ingredients).

The additive is suitably present in the coating composition in an amount of at least about 0.5 wt% (based on the total solids of the coatings ingredients), such as at least about 0.6 wt% (based on the total solids of the coatings ingredients).

The additive is suitably present in the coating composition in an amount of less than about 10 wt% (based on the total solids of the coatings ingredients), such as less than about 5wt% or even less than about 2wt% (based on the total solids of the coatings ingredients).

Suitably the colorant may derive from any food or beverage that is stored within a container and which comprises a colorant, suitably the food or beverage comprises a strong and dark colourant such as, for example, red, purple, green, blue, or black. In one embodiment, the food or beverage comprises a red colourant.

Suitably, the food or beverage comprises one or more vegetable such as peppers, carrots, sweet potato, pumpkin, sweet corn, peas or beans; and/or one or more fruit such as tomatoes, raspberries, strawberries, plums, blueberries, blackberries, blackcurrants, redcurrants, cherries; in any solid or liquid form or mixtures thereof.

The colorant comprises a chromophore, which is the part of a chemical structure that is responsible for providing colour, suitably colour in the visible spectrum. The chromophore may comprise a plurality of double bonds, suitably conjugated double bonds, such as a conjugated system of double bonds within a linear, branched or cyclic structure. In one embodiment, the chromophore may comprise one or more isoprenoid units, for example.

Suitably, the colourant may be a terpenoid, such as a tetraterpene. The colourant may comprise one or more of lycopene, alpha-carotene, beta-carotene, gamma-carotene, lutein or zeaxanthin.

A coating composition of the present invention may be applied to a range of food or beverage containers, such as tubes, boxes, cans, caps or closures, twist off caps or bottles for example. Suitably, the food or beverage container is a container formed from a metal, which may be aluminium, tin or steel, each being optionally alloyed with metals such as copper, zinc, manganese, silicon, chromium, iron or titanium, for example. Suitably, the container is formed from steel or aluminium.

Suitably, the food or beverage container is a can. The can may be formed from two or three parts as is known in the art.

Any surface of the food or beverage container may be coated on at least a portion, thereof with a coating composition of the present invention. Suitably, the container comprises an outer portion and an inner portion, wherein at least a portion of the inner portion of the container may be arranged for food contact. Suitably, at least a portion of the inner portion of the container, such as a portion arranged for food contact for example, may be coated with a coating composition of the present invention.

Suitably, the container may be coated by any technique known in the art such as by filling the food or beverage container with the coating composition and then draining the coating, spraying on the coating composition or rolling on the coating composition. The coating composition may then be cured by known methods, such as heating or application of UV radiation.

Suitably, the coating composition further comprises one or more resin, such as one or more polymeric resin. Suitably, the resin comprises a functionalised resin such that the resin comprises functional groups operable to react with a crosslinker so as to allow the resin to crosslink. Preferably, the functional groups of the resin comprise one or more epoxy, ester, amide, keto, vinyl, hydroxyl and/or carboxyl groups or any combination thereof.

Preferably, the resin comprises one or more functionalised, linear or branched polymeric resin. The resin may be selected from epoxy, polyester, and/or polyacrylate resin; the coating composition may also comprise a mixture of one or more resin of each type or mixtures of different types of resin.

The coating composition may comprise copolymers formed from mixtures of epoxy resin with polyester or acrylic polymer components or a copolymer obtained from the reaction of a polyester polymer with acrylic resin components. The resin may be saturated or unsaturated. Where the resin is unsaturated, it may include conjugated unsaturation. The resin may be substituted or unsubstituted.

In one embodiment, the coating composition comprises one or more polyester resins.

Suitable polyester resins may include polymers or copolymers derived from combinations of diols and dicarboxylic acids; polyols or polyacid components may optionally be used to produce branched polymers. Examples of suitable diols include ethylene glycol; 1,2 propane diol; 1,3 - propane diol; 1,2 -butanediol; 1,3 butandiol; 1,4 butanediol; but-2-ene 1,4 diol; 2,3-butane diol; 2- methyl 1,3 - propane diol; 2,2'-dimethyl -1,3-propanediol; 1,5 pentane diol; 3-methyl-1,5-Pentanediol ; 2,4 diethyl 1,5-pentane diol;1,6 - hexane diol; 2 ethyl 1,3 hexane diol: diethylene glycol; triethylene glycol; dipropylene glycol; tripropylene glycol; 2,2,4 trimethyl pentane 1,3 diol; 1,4 cyclohexane dimethanol ; Tricyclodecane dimethanol; 2,2,4,4-tetramethyl cyclobutane 1,3 diol; isosorbide; 1,4 cyclohexane diol; 1,1'isopropylidene-bis (4 -cyclohexanol) and mixtures thereof.

Examples of suitable polyol (or other, primarily hydroxy, functional branching monomer) which can optionally be used to produce branched polymers include: glycerine, trimethylol propane; trimethylol ethane; 1,2,6 hexane triol; pentaerythritol; erythritol; di- trimethylol propane; di-pentaerythritol; N,N,N',N' tetra (hydroxyethyl)adipindiamide; N,N,N',N' tetra (hydroxypropyl)adipindiamide; or mixtures thereof.

Examples of suitable, di carboxylic acids (or anhydride or ester derivatives) include: isophthalic acid; terephthalic acid; 1,4 cyclohexane dicarboxylic acid; succinic acid; adipic acid; azelaic acid; sebacic acid; umaric acid; 2,6 -naphthalene dicarboxylic acid; orthophthalic acid. Dicarboxylic acids can also be used in the form of cyclic anhydrides of dicarboxylic acids examples include phthalic anhydride, tetrahydrophthalic anhydride, maleic anhydride, succinic anhydride, itaconic anhydride or mixtures thereof. Dicarboxylic acids can also be used in the form of the di-ester materials, such as: dimethyl ester derivatives such as dimethyl isophthalate; dimethyl terephthalate; dimethyl 1,4 cyclohexane dicarboxylate; dimethyl- 2,6- naphthalene di carboxylate; dimethyl fumarate;dimethyl orthophthalate; dimethylsuccinate; dimethyl glutarate; dimethyl adipate,. or mixtures thereof.

Examples of suitable polycarboxylic acids (or anhydride or ester derivatives), which can be optionally be used to produce branched polymers include trimellitic anhydride trimellitic acid, pyromellitic acid or mixtures thereof.

Commercially available suitable polyester resins include one or more of the following: Uralac SN 800 or Uralac SN 805 or Uralac SN 808 or Uralac SN 842 or Uralac SN 859 or Uralac SN 860 or Uralac SN 905 or Uralac SN 908 or Uralac SN 989 or Uralac SN978 (Uralac resins commercially available from DSM), Italkid 212 or Italkid 218 or Italkyd 226 or Italkid 228 or Italkid 231 or Italkid 300 (Italkid resins commercially available from Galstaff-Multiresine), Domopol 5101 or Domopol 5102 or Domopol 5111 or Domopol 5112 or Domopol 5113 or Domopol 5117 or Domopol 5132 (Domopol resins commercially available from Helios), Dynapol LH 818 or Dynapol LH820 or Dynapol LH823 or Dynapol LH830 or Dynapol LH833 (Dynapol resins commercially available from Evonik), Uralac P1580 or Uralac 4215 or Uralac 5080 or Uralac 5930 or Uralac 6024 or Uradil 250 or Uradil 255 or Uradil 258 or Uradil SZ 260 or Uradil SZ 262 (Uralac resins commercially available from DSM), Italester 217 or Italester 218 (Italester resins commercially available from Galstaff-Multiresine).

Alternatively or additionally, the coating composition may comprise one or more epoxy resin. Suitable epoxy resins include one or more of D.E.R. 667 or D.E.R. 664 or D.E.R 662 or D.E.R 669E or D.E.R 668 or D.E.R 671 or D.E.R 734 or D.E.R 731 (D.E.R resins commercially available from Dow Chemical Company), Araldite GT6097 or Araldite GT6099 or Araldite GT7077 or Araldite GT6071 or Araldite GT6609 or Araldite GT6610 or Araldite GT7004 or Araldite GY 250 or Araldite GZ280 or Araldite GZ 7071 (Araldite resins commercially available from Jubail Chemical Industries Company), Epotec YDH184 or Epotec YDH 3000 or Epotec YD017 or Epotec YD019 or Epotec YD010 (Epotec resins commercially available from Additya Birla India).

Suitable epoxy resins may also include polymers or copolymers derived from epichlorohydrin and phenolic or hydroxyl components other than Bisphenol A. These are so called Bisphenol A free epoxy materials. Non limiting examples of the phenolic or Hydroxyl materials which could be used include bisphenol F, resorcinol, 4,4' di hydroxy biphenyl, 2,2' dihydroxy biphenyl, dihydroxy naphthalene materials such as 2,6 dihydroxy naphthalene, 2,7 dihydroxy naphthalene and cyclohexane dimethanol. The phenolic hydroxyl component is combined with epichlorohydrin to make the diglycydyl ether or higher polymer which can be further advanced in molecular weight with more hydroxyl or phenolic material. Examples include Epon 862 and Heloxy 107 (commercially available from Momentive) Erisys RDGE (commercially available from CVC thermoset materials) Denacol EX-201 (commercially available from Nagase Chemtex) and derivatives thereof.

Suitably, a polyacrylate (co)polymer is formed from one or more type of C0 to C6 alkyl (C0 to C1 alk) acrylate monomer units. Examples of suitable C1 to C6 alkyl (C0 to C1 alk) acrylate materials include (meth)acrylic acid, methyl (meth)acrylate; ethyl (meth)acrylate; propyl (meth)acrylate; butyl (meth)acrylate. The C1 to C6 alkyl (C0 to C1 alk) acrylate may comprise one or more functional group, such as an epoxy group, hydroxyl group or alkoxy methyl ether. For example a C1 to C6 alkyl (C0 to C1 alk) acrylate may comprise glycidyl methacrylate, hydroxy ethyl acrylate, hydroxyethyl methacrylate or n-butoxymethylacrylamide. The reaction mixture may further comprise one or more ethylenically unsaturated monomer. In one embodiment, the reaction mixture may comprise an aryl substituted ethylenically unsaturated monomer, such as styrene, for example.

In one embodiment, the coating composition may comprise one or more polacrylate resins. Suitable polyacrylate resins can include one or more of hydroxyl or acid functional solution acrylic resins such as Paraloid AT-746 , Paraloid AT-63 Paraloid AT-81 , Paraloid AT-147 Paraloid AT-85 or Paraloid AT-9L0 (Paraloid resins commercially available from Dow Chemical) or polymers such as Synocryl 7013 SD50 (commercially available from Arkema). Suitable polyacrylate materials may also include polymers as described in US7858162. For example, an acrylic homopolymer or copolymer. Various acrylic monomers can be combined to prepare the acrylic (co)polymer used in the present invention. Examples include methyl(meth)acrylate, ethyl(meth)acrylate, butyl(meth)acrylate, hydroxy alkyl(meth)acrylate, 2-ethylhexyl(meth)acrylate, behenyl(meth)acrylate, lauryl(meth)acrylate, allyl(meth)acrylate isobornyl(meth)acrylate, ethylene glycol di(meth)acrylate, (meth)acrylic acid, vinyl aromatic compounds such as styrene and vinyl toluene, nitrites such as (meth)acrylonitrile, and vinyl ester such as vinyl acetate. Any other acrylic monomers known to those skilled in the art could also be used.

For the avoidance of doubt, the term "(meth)acrylate" and like terms are used herein to refer to both methacrylate and acrylate.

Suitable resins may also include copolymers of polyacrylates with polyester materials. Examples of copolymers of this type and various methods for their preparation are described in US7745508. For example, the polyester and acrylate copolymer can be in the formation of a graft copolymer. A graft copolymer can be formed using techniques standard in the art. In one method, the polyester is prepared according to conventional methods using the materials described above. The acrylic monomers are then added to the polyester. The acrylic can then be polymerized using a standard free radical initiator. In this manner, the acrylate copolymer is grafted to the already-made polyester. Alternatively, the polyester can be grafted to an already-made acrylic copolymer. In this embodiment, a maleic anhydride group can be polymerized in the acrylic copolymer and, subsequently, hydroxyl groups from the polyester can be allowed to react with the acrylic to create a graft copolymer; the result will be an acrylic copolymer having polyester moieties grafted thereto. In the methods for grafting, one selects a moiety to be incorporated into the polyester and a monomer to be included with the acrylate monomers that will react with each other. A particularly suitable example uses maleic anhydride in the formation of a polyester and styrene as one of the acrylic monomers. In this embodiment, the styrene will react with the maleic anhydride; the acrylic copolymer will grow off of the styrene through the formation of free radicals. The result will be a polyester having acrylic copolymers grafted thereto. It will be appreciated that in some circumstances not all of the acrylic and polyester will graft; thus, there will be some "neat" polyester and some "neat" acrylate copolymer in the solution. Enough of the acrylate copolymer and polyester will graft, however, to compatibilize the two normally incompatible polymers.

It will be appreciated that maleic anhydride and styrene are offered as examples of two components that will promote grafting between the normally incompatible polymers, but that the components are not so limited. Other components such as fumaric acid/anhydride or itaconic acid/anhydride may be incorporated into a polyester for grafting with a styrene containing acrylic. Other moieties that will promote grafting between the polyester and acrylic can also be used. Any group of compounds can be used for this purpose. All of these compounds are referred to herein as "graft promoting components". The amount of graft promoting component used in each of the polyester and/or acrylate portions can affect the final product. If too much of these components are used, the product can gel or be otherwise unusable. The graft-promoting components should therefore be used in an amount effective to promote grafting but not to cause gelling. Enough grafting should be effected to allow the polyester and acrylate polymers to be compatible. In the maleic anhydride/styrene example, usually 2 to 6 weight percent maleic with 8 to 30 weight percent styrene can be used, with weight percent being based on the weight of the polyester and the weight of the acrylic, respectively.

In one embodiment, the resin material may itself disrupt the chromophore of a colourant, in which case, the resin may be one of or the additive. For example, the resin may comprise a plurality of double bonds, which may be conjugated. Alternatively, the resin may comprise siccative properties, such as by having one or more metals complexed therewith.

The resin may be natural or synthetic. Suitably the resin is synthetic.

In one embodiment, the coating composition comprises an epoxyamine or acrylamide resin.

The resin may be present in the coating composition in any amount of about 20 to 90 wt% (based on the total solids of the coatings ingredients) and suitably of about 30 to 85 wt% (based on the total solids of coatings ingredients), such as about 35 to 80 wt% (based on the total solids of the coatings ingredients).

In one embodiment, the coating composition itself includes a colourant to impart colour to the coating composition, such as a white colourant (such as TiO₂ pigment, for example). In such scenarios, the resin may be present in the coating composition in any amount of about 20 to 80 wt% (based on the total solids of the coatings ingredients) and suitably of about 25 to 70 wt% (based on the total solids of coatings ingredients), such as about 30 to 50 wt% (based on the total solids of the coatings ingredients).

In one embodiment, the coating composition does not include a colourant (or includes only very small amounts of colourant) and as such, is referred to as a clear coating. In such scenarios, the resin may be present in the coating composition in any amount of about 30 to 90 wt% (based on the total solids of the coatings ingredients) and suitably of about 35 to 85 wt% (based on the total solids of coatings ingredients), such as about 40 to 70 wt% (based on the total solids of the coatings ingredients).

Suitably, the resin typically has a weight average molecular weight in the range of 3000 to 100000 Da. In one embodiment, the resin may have a weight average molecular weight in the range of 10000 to 100000 Da, such as 20000to 65000 Da. In another embodiment, the resin may have a weight average molecular weight in the range of 3000 to 10000 Da, such as 3000 to 6000 Da.

The number-average molecular weight (Mn) may be measured by any suitable method. Techniques to measure the number-average molecular weight will be well known to a person skilled in the art. Suitably, the Mn may be determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml).

A person skilled in the art will appreciate that techniques to measure the number-average molecular weight may also be applied to measure the weight-average molecular weight.

In some embodiments, the resin exhibits a glass transition temperature (Tg) greater than about -20°C, such as greater than about 0°C, such as greater than about 10°C.

Tg as mentioned herein may be measured by any suitable method. Methods to measure Tg will be well known to a person skilled in the art. Suitably, the Tg is measured according to ASTM D6604-00(2013) ("Standard Practice for Glass Transition Temperatures of Hydrocarbon Resins by Differential Scanning Calorimetry". Heat-flux differential scanning calorimetry (DSC), sample pans: aluminium, reference: blank, calibration: indium and mercury, sample weight: 10mg, heating rate: 20°C/min).

In one embodiment, the coating composition comprises one or more coating layer containing one or more colourant, which may be a white colourant. The colourant may comprise a metal oxide such as titanium or zinc oxide.

The coating composition may be an undercoat, an intermediate coat or a topcoat.

Suitably, the coating composition may comprise a crosslinker.

The crosslinker may comprise one or more crosslinking agents suitable for crosslinking the resin. For example, the crosslinking agent may be selected from one or more of: a hydroxyl substituted aromatic group containing agent; an isocyanate group containing agent; an amino group containing agent; an amine group containing agent; a urea-formaldehyde agent or an alkylated urea with imino functionality. One or more of the crosslinking agent may be in the form of a single molecule, a dimer, an oligomer, a (co)polymer or a mixture thereof. Suitably, one or more of the crosslinking agent may be in the form of a dimer or trimer.

In one embodiment, the crosslinking agent comprises one or more hydroxyl substituted aromatic group, suitably the crosslinking agent may comprise one or more di-hydroxyl substituted aromatic group.

Suitably, the coating composition may comprise a crosslinker selected from an optionally substituted phenol-aldehyde or phenol-ketone (co)polymer, such as a phenol-aldehyde (co)polymer. Such a phenol-aldehyde (co)polymer may comprise one or more of phenol-formaldehyde (co)polymer or phenol-acetaldehyde (co)polymer. For example, the crosslinker may comprise an optionally substituted phenol-formaldehyde (co)polymer. Such a substituted phenol formaldehyde (co)polymer may comprise ortho -cresol , meta -cresol or para- cresol and mixtures thereof. Any other substituted phenols known to those skilled in the art may be alternatively or additionally used.

Various commercially available crosslinkers are suitable for use in the present invention. For example, suitable phenolic materials include Phenodur EK-827 or Phenodur VPR1785 or Phenodur PR 515 or Phenodur PR516 or Phenodur PR 517or Phenodur PR 285 or Phenodur PR612 or Phenodur PH2024 (Phenodur crosslinkers commercially available from Cytec Industries), SFC 112 (commercially available from Schenectady) or Bakelite 6535 or Bakelite PF9989 or Bakelite PF6581 (Bakelite crosslinkers commercially available from Momentive) or other type of crosslinkers to react with the OH groups externally.

Suitable isocyanate containing crosslinking agents may include one or more of IPDI (isophorone diisocyanate) like Desmodur VP-LS 2078/2 or Desmodur PL 340 (Desmodur crosslinkers commercially available from Bayer) or Vestanat B 1370 or Vestanat B1358A (Vestanat crosslinkers commercially available from Evonik) or blocked aliphatic polyisocyanate based on HDI like Desmodur BL3370 or Desmodur BL 3175 SN (commercially available from Bayer) or Duranate MF-K60X (commercially available from Asahi KASEI) or Tolonate D2 (commercially available from Perstorp) or Trixene-BI-7984 or Trixene 7981 (commercially available from Baxenden).

Suitable amino containing crosslinking agents may include one or more of Melamine formaldehyde type materials of the hexakis(methoxymethyl)melamine (HMMM) type such as Komelol 90GE (commercially available from Melamin), Maprenal MF900 (commercially available from Ineos Melamines) or Resimene 745 or Resimene 747 (commercially available from Ineos Melamines) or Cymel 303 or Cymel MM100 (commercially available from Cytec). Other melamine formaldehyde type material such as butylated methylol melamine type resins such as Cymel 1156 or Cymel 1158 (commercially available from Cytec) or mixed ether type methylal melamine resins such as Cymel 1116, Cymel 1130, Cymel 1133 or Cymel 1168 (commercially available from Cytec) or part methylolated and part methalated melamine type resins such as Cymel 370, Cymel 325 or Cymel 327 (commercially available from Cytec).

Other types of suitable amino containing crosslinking agents may include one or more of benzoguanamine formaldehyde type materials like Cymel1123 (commercially available from Cytec), Itamin BG143 (commercially available from Galstaff Multiresine) or Maprenal (Uramex) BF891 or Maprenal BF892 (commercially available from Ineos). Further examples of suitable amino containing crosslinking agents include glycouril based materials such as Cymel 1170 and Cymel 1172 (commercially available from Cytec).

In some embodiments, for example when the resin comprises an epoxy resin, the crosslinker may have amine functionality that can crosslink with the epoxy resin.

Suitable amine containing crosslinking agents may include one or more of Triethylenetetramine (commercially available from Bayer), Aradur 115 BD, 125BD, 140BD (commercially available from Huntsman), dicyandiamide (commercially available from AlzChem) or CASAMID DMPFF.

Suitable urea-formaldehyde containing crosslinking agents may include one or more of Cymel U-80 or Cymel U-60 (commercially available from Cytec Industries), Maprenal UF 264 (commercially available from Ineos), Astro Set 90 (commercially available from Momentive), Arazin 42-316 or Arazin 42-338 or Arazin 42-360 or Arazin 42-365 or Arazin 42-367 or Arazin 42-378 (commercially available from Bitrez).

The crosslinking agent may be present in the coating composition in an amount of about 3 to 60 wt% (based on the dry weight of the coatings ingredients), such as about 5 to 50 wt% (based on the dry weight of the coatings ingredients). In one embodiment, the crosslinker may be present in the coating composition in any amount of about 10 to 50 wt% (based on the dry weight of the coatings ingredients), such as about 15 to 45 wt% (based on the dry weight of the coatings ingredients), or such as about 25 to 40 wt% (based on the dry weight of the coatings ingredients).

The coating composition may be formed with or without a liquid carrier. Should a liquid carrier be present, the coating composition may form a dispersion in the liquid carrier phase.

When a liquid carrier is present, the coating composition suitably has a solids content of about 20 to 99 wt%, such as about 25 - 60 wt%. The amount of liquid carrier included in the coating composition is dictated primarily by the required rheological properties for the application of the composition to the substrate. A sufficient amount of carrier liquid will normally be an amount that allows for easy processing and application to the metal substrate as well as sufficient removal during the desired curing time.

The liquid carrier comprises one or more diluents which may be aqueous or organic, preferably the liquid carrier comprises an organic diluent, more preferably one or more hydrocarbon diluents. Suitable hydrocarbon diluents can include the aromatic hydrocarbons xylene, mixed xylenes, solvesso 100 (available from Exxon Chemical) or similar commercially available aromatic hydrocarbon mixtures and Solvesso 150 or Solvesso 150 (Naphthalene depleted) (available from Exxon Chemical) or similar commercially available aromatic hydrocarbon mixtures or esters such as Propylene Glycol Methyl Ether acetate or glycol ether such Dowanol PM or Dowanol DPM (commercially available from Dow).

Furthermore, as will be appreciated by those skilled in the art, depending upon the desired application, the coating composition of the present invention may further comprise other additives such as water, lubricants, coalescing solvents, levelling agents, defoamers (e.g. modified (poly)siloxanes), thickening agents (e.g. methyl cellulose), cure accelerators, suspending agents, surfactants, adhesion promoters, cross-linking agents, dispersants (e.g lecithin), corrosion inhibitors, wetting agents, fillers (e.g. titanium dioxide, zinc oxide, aluminium), matting agents (e.g. precipitated silica) and the like.

A coating composition according to the present invention may be prepared by mixing of the components after the polymeric resin is dissolved into solvents, if necessary (e.g with solid resin).

According to a second aspect of the present invention there is provided the use of an additive in a coating composition for reducing or preventing food or beverage staining of a food or beverage container coated with the coating composition, the additive being operable to disrupt the chromophore of a colourant, upon absorption of the said colourant into the cured coating composition.

According to a third aspect of the present invention there is provided a food or beverage container comprising a coating derived from a coating composition as described in the first aspect of the present invention.

The present invention in particular extends to a food can having at least a portion of an internal thereof comprising a coating derived from a coating composition as described in the first aspect of the present invention.

The coating composition of the present invention advantageously provides improved aesthetic qualities to a food or beverage container to which it is applied by forming a coating which reduces or prevents the reflection or transmittance of visible light by a colourant which has been absorbed into the coating from the food or beverage stored within the container. By reducing or preventing the reflection or transmittance of visible light by the colourant, the colourant cannot be seen to have a colour (or can be seen to have less of a colour) to the naked eye and therefore the coating remains the colour intended by the manufacturer, typically white or gold and sometimes clear (colourless), and any perceived staining is reduced or prevented. This has improved eye appeal for consumers when opening the container, and therefore adds to the perceived quality of the food or beverage product.

For a better understanding of the invention, and to show how embodiments of the same may be carried into effect, reference will now be made, by way of example, to the following experimental data.

### Example 1

The coating compositions as listed in table 1 were prepared as described below. All quantities given in the tables are shown in parts by weight.

**Table 1**

| Item n° | Item description | **Control Coating composition** | **Test coating composition 1** | **Test coating composition 2** | **Test coating composition 3** | **Test coating composition 4** |
|---|---|---|---|---|---|---|
| **1** | **Polyester A¹** | 16,70 | 16,70 | 16,70 | 16,70 | 16,70 |
| **2** | **Tiona 595²** | 18,57 | 18,57 | 18,57 | 18,57 | 18,57 |
| **3** | **Solvesso 150 ND** | 1,00 | 1,00 | 1,00 | 1,00 | 1,00 |
| **4** | **Lanco Wax TF1780EF³** | 0,20 | 0,20 | 0,20 | 0,20 | 0,20 |
| **5** | **Solution de Lanoline 15%** | 1,00 | 1,00 | 1,00 | 1,00 | 1,00 |
| **6** | **Polyester A¹** | 39,00 | 39,00 | 39,00 | 39,00 | 39,00 |
| **7** | **Uramex BF891⁴** | 9,36 | 9,36 | 9,36 | 9,36 | 9,36 |
| **8** | **Cycat 600⁵** | 0,10 | 0,10 | 0,10 | 0,10 | 0,10 |
| **9** | **Solvesso 150 ND** | 0,90 | 0,90 | 0,90 | 0,90 | 0,90 |
| **10** | **Xylene** | 0,27 | 0,27 | 0,27 | 0,27 | 0,27 |
| **11** | **XL480⁶** | 0,03 | 0,03 | 0,03 | 0,03 | 0,03 |
| **12** | **Xylène** | 0,15 | 0,15 | 0,15 | 0,15 | 0,15 |
| **13** | **Byk-088⁷** | 0,15 | 0,15 | 0,15 | 0,15 | 0,15 |
| **14** | **Dowanol PMA** | 3,83 | 3,83 | 3,83 | 3,83 | 3,83 |
| **15** | **Solvesso 150 ND** | 6,78 | 6,78 | 6,78 | 6,78 | 6,78 |
| **16** | **Poly Bd R20 LM⁸** | | 0,98 | | | |
| **17** | **Solvesso 150 ND** | | 0,98 | | | |
| **18** | **Poly Bd 605E⁹** | | | 0,98 | | |
| **19** | **Methoxypropanol** | | | 0,98 | | |
| **20** | **Poly Bd R45¹⁰** | | | | 0,98 | |
| **21** | **Solvesso 150 ND** | | | | 0,98 | |
| **22** | **Octa-Soligen Calcium 5 ¹¹** | | | | | 0,3 |
| **23** | **Solvesso 150 ND** | | | | | 2,7 |

| | | | | | | |
|---|---|---|---|---|---|---|
| ¹= Polyester binder details of preparation described below. ²= Titanium dioxide pigment commercially available from Millenium ³= Micronized PTFE-Modified Polyethylene Wax commercially available from Lubrizol ⁴= Melamin resin commercially available from Ineos ⁵= Dodecylbenzylsulfonic acid solution commercially available from Cytec ⁶= Amine resin modified acrylic copolymer commercially available from Cytec ⁷= Defoamer commercially available from Byk-Chemie ^{8, 9, 10}= Polybutadiene grades commercially available from Cray Valley ¹¹= Calcium bis(2-ethylhexanoate) commercially available from OMG Borchers | | | | | | |

### Polyester A Preparation

A reaction vessel was set up for manufacture of a polyester using fusion and azeotropic distillation. The vessel was equiped with a stirrer, nitrogen sparge, packed column, condenser, separator and return from the separator. Ethylene glycol 74 gm, Neopentyl glycol 665 gm, 1,4-cyclohexane dimethylol 338 gm, isophthalic acid 862 gm, terephthalic acid 754 gm and butylstannoic acid 1.14 gm were charged to the reactor. The mixture was then heated and when the glycols had melted the stirrer was started, heating was continued until distillation began at 166 deg C, the reactor temperature was steadily increased to a maximum of 245 degC whilst maintaining a steady rate of distillation.. When the reaction mixture became clear, at acid value 17.8 mg KOH/gm, a sample was taken and tested for net Hydroxyl value. The net Hydroxyl value, 6.55 mg KOH/gm in this preparation, was adjusted to 7 to 8 mg KOH/gm. The separator was filled with Xylene and water and Solvesso150 (Naphthalene depleted) aromatic hydrocarbon solvent was added to the reactor. Reaction was then continued under azeotropic distillation at a reaction temperature around 210 deg C. The reaction was continued until the acid value of the samples from the reactor had decreased to below 2 mgKOH/gm and a viscosity (tested by solution at 33% solids in Solvesso 150 ND /Propylene glycol methyl ether acetate 1/1) had reached 9 to 14 poise at 25 degC, The final sample, for this batch, as measured was acid value 1.54 mg KOH/gm and solution viscosity 13.3 poise at 25C . The reaction mixture was cooled and dissolved in Solvesso 150 (naphthalene depleted) 1694 gm and propylene glycol methyl ether acetate 2156 gm. The final polyester solution had the characteristics of solids content 35.3% (0.5 gm 150degC 60 min) viscosity 14.7 poise at 25 degC Acid value 1.7 mg KOH/gm (on solids) and Mn 16349 , Mw 37125 by GPC using polystyrene standards.

### Coating Preparation

Coating compositions 1 to 4 and the control composition were prepared in a vessel equipped with stirring system at ambient temperature. While item 1 was under slow agitation, item 2 was added to create a paste. Then stirring speed was increased until approximately 3000 to 5000 rpm until complete pigment dispersion. Fineness of grind was checked and particles size had to be fewer than 10 microns. Under stirring, items 3, 4, 5, 6 and 7 were added in this order. Then premix 8-9, premix 10-11, premix 12-13 were prepared separately and added in the mixture under mixing at 1500rpm. Viscosity is finally adjusted with items 14 and 15.

When mixing, basic rules of mixing as known in the art are respected, the dispersion or mixing blade size used is about 1/3 of the diameter of the mixing pot.

The additives shown as items 16-17, 18-19, 20-21 and 22-23 were prepared as premixes and added to the coating compositions in 1 to 4 in order to test the additive effect on the staining properties of the coating compositions.

The coatings produced from the control composition and compositions 1 to 4 outlined above were applied to tinplate or TFS metal panels.

The coatings were applied with a roller coater to stick to industrial application system or a bar coater if no coating device is available. Applied film weight is between 14 and 18 gsm for single coat application or between 7 and 10 gsm per layer for two coats application in case of aggressive food.

After application, the coatings were dried for 10 minutes in a fan assisted oven at a temperature of 200°C. Drying process produces a white cured film of each coating which is tested, as outlined in the details below, to demonstrate the performance of the protective coating applied to this panel.

Typical staining conditions were reproduced with 2 tests: the panels were immersed in a tomato solution for discovering the immediate effect of the lycopene colourant contained in tomatoes on the white coatings, and the panels were also processed into cans and filled with the tomato solution, the cans were then stored for discovering the longer term effect of the lycopene colourant of tomatoes on the white coatings.

The tomato solution was prepared by mixing double concentrate tomato puree with water in ratio 3: 1.

In the first test, the coated panels were immersed partially in this solution for 30 min at 115°C.

In the second test, the cans were filled with the tomato solution as described above, heated for 30 minutes at 115C, then stored 2 weeks at 70°C. They were opened after these two weeks.

Staining was evaluated first with a visual check and then using colorimetric measurement.
• Visual check
Coloration was observed just after processing of the panels or the opening of the cans. Grade 0 corresponds to no coloration change, coating is still white, and grade 5 corresponds to high staining level, coating is yellowed/redish (color pick up is yellow when little color pick up and more redish when more color pick up)
• Colorimetric check
In order to get more details about staining, measurements were made on the panels and cans using a spectrophotometer CEILAB system (SP64 commercially available from X-Rite). Parameters used are explained in table 2 below:

**Table 2**

| Illuminant Type | Standard Observers | Measuring Geometrics | Color difference model |
|---|---|---|---|
| D65 | 10° | D8i | Delta-E CMC(2:1) |

In the CIELAB system, measurements are expressed as three coordinates: L*, a*and b*. L* represents the lightness of the color: L* = 0 yields black and L* = 100 indicates diffuse white. a* is the position between red and green: a negative value indicates green while a positive value indicates red. b* is the position between yellow and blue: a negative value indicates blue and a positive value indicates yellow.
Staining caused by tomatoes is mainly red and yellow. Therefore, it is detected by positive values of a* and b*. All test coatings were measured in comparison to a standard coating which is the same coating composition comprising the relevant additive but without any exposure to tomato solution or processing. The results are expressed as an observed Da value that is the difference between the a* value for the standard coating and the a* value for test coatings. The lower the value, the more similar the standard coating and the tested coating were, therefore the more unstained the tested coating appears after exposure to the lycopene colourant derived from the tomatoes.

The control and the test coating compositions were prepared, applied and dried as outlined in the preceding descriptions. The coated panels obtained were then tested. Evaluation results are compiled in table 3 below.

**Table 3**

| | **Control coating composi tion** | **Test coating composi tion 1** | **Test coating composi tion 2** | **Test coating composi tion 3** | **Test coating composi tion 4** |
|---|---|---|---|---|---|
| Staining visual evaluation | 4 | 1 | 3 | 2 | 2 |
| Da value (colorimetric measurement) | 2,36 | 0,6 | 1,53 | 1,1 | 1,34 |

Results in table above show that the control composition which comprises no additive is very sensitive to tomato staining. All test coating compositions 1 to 4 comprising an additive have a positive effect in staining reduction.

After visual checking, coating compositions 1, 3 and 4 are the most interesting coating compositions tested. Colorimetric measurement is a precise method that can separate these three close results. From the colorimetric results, it appears that the additive within coating compositions 1 and 3 is the most efficient in reducing staining.

Hydroxyl terminated polybutadiene was the additive used in coating compositions 1 and 3, this additive is more efficient for reducing staining than the epoxidized polybutadiene used as an additive in coating composition 4 and the Octa-soligen Calcium 5 used as an additive in coating composition 2. The polybutadiene additive used in coating composition 1 has a lower molecular weight than that used in coating composition 2. This could provide a better reactivity to the additive, and therefore cause a better reaction with the double bond of the chromophore of the lycopene colourant to occur. This could explain the better reduction in staining observed in coating composition 1 when compared to coating composition 3. On this basis, it seems that low molecular weight hydroxyl terminated polybutadiene, as used in coating composition 1, is the best additive with which to reduce staining of coating compositions for use in food or beverage containers such as cans. In particular, these results show that the specific additive Poly Bd ® R20 LM is an optimal additive to reduce staining in coating compositions.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A coating composition for a food or beverage container, the coating composition comprising an additive being operable to disrupt the chromophore of a colourant, upon absorption of the said colourant into the cured coating composition, and wherein the coating composition further comprises a crosslinking agent.

2. A coating composition according to claim 1, wherein the additive is operable to interact with a conjugated system or conjugated double bonds of a chromophore of an absorbed colourant.

3. A coating composition according to either of claim 1 or claim 2, wherein the additive comprises hydroxyl functional polybutadiene.

4. A coating composition according to either of claim 1 or 2, wherein the additive comprises a siccative material.

5. A coating composition according to claim 4, wherein the siccative material comprises a metal, such as a transition metal.

6. A coating composition according to either of claim 4 or claim 5, wherein the siccative material comprises a calcium containing material, such as calcium octoate.

7. A coating composition according to any preceding claim, wherein the additive is suitably present in the coating composition in an amount of 0.2 - 6 wt% by total solids of the coating composition.

8. A coating composition according to any preceding claim, wherein the colourant comprises lycopene, alpha-carotene, beta-carotene, gamma carotene, lutein and/or zea xanthin.

9. A coating composition according to any preceding claim, wherein the coating composition further comprises a resin, such as one or more polymeric resin.

10. A coating composition according to claim 9, wherein the resin is present in the coating composition in an amount of 30 to 90 wt% based on the total solids of the coating composition.

11. A coating composition according to either of claim 9 or claim 10, wherein the resin has a weight average molecular weight (Mw) in the range of 3000 to 100000 Da and/or wherein the resin exhibits a glass transition temperature (Tg) greater than - 10°C, such as greater than 0°C.

12. A coating composition according to any preceding claim, wherein the crosslinking agent comprises a hydroxyl substituted aromatic group containing agent; an isocyanate group containing agent; an amino group containing agent; an amine group containing agent; a urea-formaldehyde agent and/or an alkylated urea with imino functionality

13. Use of an additive in a coating composition for preventing or reducing food or beverage staining of a food or beverage container coated with the coating composition, the additive being operable to disrupt the chromophore of a colourant, upon absorption of the said colourant into the cured coating composition.

14. A food or beverage container comprising a coating derived from a coating composition according to any of claims 1 to 12.

15. A food can having at least a portion of an internal surface thereof coated with a coating derived from a coating composition according to any of claims 1 to 12.

## Patentansprüche

1. Beschichtungszusammensetzung für einen Lebensmittel- oder Getränkebehälter, wobei die Beschichtungszusammensetzung ein Additiv umfasst, welches dazu befähigt ist, bei Absorption eines Farbmittels in der gehärteten Beschichtungszusammensetzung das Chromophor des Farbmittels zu stören, und wobei die Beschichtungszusammensetzung ferner ein Vernetzungsmittel umfasst.

2. Beschichtungszusammensetzung nach Anspruch 1, wobei das Additiv dazu befähigt ist, mit einem konjugierten System oder konjugierten Doppelbindungen eines Chromophors eines absorbierten Farbmittels zu wechselwirken.

3. Beschichtungszusammensetzung nach Anspruch 1 oder Anspruch 2, wobei das Additiv hydroxylfunktionelles Polybutadien umfasst.

4. Beschichtungszusammensetzung nach Anspruch 1 oder Anspruch 2, wobei das Additiv eine trocknende Substanz umfasst.

5. Beschichtungszusammensetzung nach Anspruch 4, wobei die trocknende Substanz ein Metall, wie ein Übergangsmetall, umfasst.

6. Beschichtungszusammensetzung nach Anspruch 4 oder Anspruch 5, wobei die trocknende Substanz eine calciumhaltige Substanz, wie Calciumoctoat, umfasst.

7. Beschichtungszusammensetzung nach einem der vorhergehenden Ansprüche, wobei das Additiv in der Beschichtungszusammensetzung geeigneterweise in einer Menge von 0,2-6 Gew.-%, bezogen auf die gesamten Feststoffe der Beschichtungszusammensetzung, vorliegt.

8. Beschichtungszusammensetzung nach einem der vorhergehenden Ansprüche, wobei das Farbmittel Lycopen, alpha-Carotin, beta-Carotin, gamma-Carotin, Lutein und/oder Zeaxanthin umfasst.

9. Beschichtungszusammensetzung nach einem der vorhergehenden Ansprüche, wobei die Beschichtungszusammensetzung ferner ein Harz, wie ein oder mehrere Polymerharze, umfasst.

10. Beschichtungszusammensetzung nach Anspruch 9, wobei das Harz in der Beschichtungszusammensetzung in einer Menge von 30 bis 90 Gew.-%, bezogen auf die gesamten Feststoffe der Beschichtungszusammensetzung, vorliegt.

11. Beschichtungszusammensetzung nach Anspruch 9 oder Anspruch 10, wobei das Harz ein gewichtsmittleres Molekulargewicht (Mw) im Bereich von 3000 bis 100.000 Da aufweist und/oder wobei das Harz eine Glasübergangstemperatur (Tg) von mehr als -10 °C, wie mehr als 0 °C, aufweist.

12. Beschichtungszusammensetzung nach einem der vorhergehenden Ansprüche, wobei das Vernetzungsmittel ein eine hydroxylsubstituierte aromatische Gruppe enthaltendes Mittel; ein isocyanatgruppenhaltiges Mittel; ein aminogruppenhaltiges Mittel; ein amingruppenhaltiges Mittel; ein Harnstoff-Formaldehyd-Mittel und/oder einen alkylierten Harnstoff mit Iminofunktionalität umfasst.

13. Verwendung eines Additivs in einer Beschichtungszusammensetzung zur Prävention oder Verringerung der Anfärbung eines mit der Beschichtungszusammensetzung beschichteten Lebensmittel- oder Getränkebehälters durch Lebensmittel oder Getränke, wobei das Additiv befähigt ist, bei Absorption eines Farbmittels in der gehärteten Beschichtungszusammensetzung das Chromophor des Farbmittels zu stören.

14. Lebensmittel- oder Getränkebehälter, umfassend eine Beschichtung, die sich von einer Beschichtungszusammensetzung nach einem der Ansprüche 1 bis 12 ableitet.

15. Lebensmitteldose, deren Innenfläche zumindest teilweise mit einer Beschichtung, die sich von einer Beschichtungszusammensetzung nach einem der Ansprüche 1 bis 12 ableitet, beschichtet ist.

## Revendications

1. Composition de revêtement pour un contenant destiné à des aliments ou à des boissons, la composition de revêtement comprenant un additif qui peut être utilisé pour perturber le chromophore d'un colorant, lors de l'absorption dudit colorant dans la composition de revêtement durcie, et la composition de revêtement comprenant en outre un agent de réticulation.

2. Composition de revêtement selon la revendication 1, dans laquelle l'additif peut être utilisé pour interagir avec un système conjugué ou des doubles liaisons conjuguées d'un chromophore d'un colorant absorbé.

3. Composition de revêtement selon l'une ou l'autre des revendications 1 ou 2, dans laquelle l'additif comprend un polybutadiène à fonctionnalité hydroxyle.

4. Composition de revêtement selon l'une ou l'autre des revendications 1 ou 2, dans laquelle l'additif comprend un matériau siccatif.

5. Composition de revêtement selon la revendication 4, dans laquelle le matériau siccatif comprend un métal, tel qu'un métal de transition.

6. Composition de revêtement selon l'une ou l'autre des revendications 4 ou 5, dans laquelle le matériau siccatif comprend un matériau contenant du calcium, tel que l'octoate de calcium.

7. Composition de revêtement selon l'une quelconque des revendications précédentes, dans laquelle l'additif est présent de manière appropriée dans la composition de revêtement dans une quantité de 0,2 à 6 % en poids relativement aux solides totaux de la composition de revêtement.

8. Composition de revêtement selon l'une quelconque des revendications précédentes, dans laquelle le colorant comprend le lycopène, l'alpha-carotène, le bêta-carotène, le gamma-carotène, la lutéine et/ou la zéaxanthine.

9. Composition de revêtement selon l'une quelconque des revendications précédentes, la composition de revêtement comprenant en outre une résine, telle qu'une ou plusieurs résines polymères.

10. Composition de revêtement selon la revendication 9, la résine étant présente dans la composition de revêtement dans une quantité de 30 à 90 % en poids relativement aux solides totaux de la composition de revêtement.

11. Composition de revêtement selon l'une ou l'autre des revendications 9 ou 10, dans laquelle la résine a une masse moléculaire moyenne en poids (Mw) de 3 000 à 100 000 Da et/ou dans laquelle la résine présente une température de transition vitreuse (Tg) supérieure à -10 °C, par exemple supérieure à 0 °C.

12. Composition de revêtement selon l'une quelconque des revendications précédentes, dans laquelle l'agent de réticulation comprend un agent contenant un groupe aromatique à substitution hydroxyle ; un agent contenant un groupe isocyanate ; un agent contenant un groupe amino ; un agent contenant un groupe amine ; un agent urée-formaldéhyde et/ou une urée alkylée ayant une fonctionnalité imino.

13. Utilisation d'un additif dans une composition de revêtement pour prévenir ou réduire le tachage par des aliments ou des boissons d'un contenant destiné à des aliments ou à des boissons revêtu de la composition de revêtement, l'additif pouvant être utilisé pour perturber le chromophore d'un colorant, lors de l'absorption dudit colorant dans la composition de revêtement durcie.

14. Contenant destiné à des aliments ou à des boissons comprenant un revêtement dérivé d'une composition de revêtement selon l'une quelconque des revendications 1 à 12.

15. Boîte métallique pour aliments dont au moins une partie d'une surface interne est revêtue d'un revêtement dérivé d'une composition de revêtement selon l'une quelconque des revendications 1 à 12.
